# EUROPÄISCHE PATENTSCHRIFT

(11) **EP 0 453 887 B1**
(45) Veröffentlichungstag und Bekanntmachung des Hinweises auf die Patenterteilung: **05.10.1994**
(21) Anmeldenummer: 91105755.2
(22) Anmeldetag: 11.04.1991
(51) Int. Cl.: B60Q 1/56

(54) **Kennzeichenleuchte für Kraftfahrzeuge**
Car number plate light
Feu pour plaque d'immatriculation de véhicule

(30) Priorität: 27.04.1990 DE 4013503
(43) Veröffentlichungstag der Anmeldung: 30.10.1991
(73) Patentinhaber: Hella KG Hueck & Co., 59552 Lippstadt (DE)
(72) Erfinder: Laser, Horst, W-4780 Lippstadt (DE)

(56) Entgegenhaltungen:
- US-A- 4 868 723

## Beschreibung

Die Erfindung betrifft eine Kennzeichenleuchte für Kraftfahrzeuge mit einem Gehäuse, einer Lichtquelle, einer Fassung für die Lichtquelle in dem Gehäuse und mit einer Lichtscheibe, die Abschnitte mit optisch wirksamen Elementen aufweist, die als Linsen und/oder Prismen ausgebildet sind.

Aus der deutschen Auslegeschrift DE-AS 16 55 760 ist eine Kennzeichenleuchte für Kraftfahrzeuge bekannt, die oberhalb oder unterhalb des Kennzeichenschildes angebracht werden kann. Die Kennzeichenleuchte weint ein Gehäuse auf, das in dem dem Kennzeichenschild zugewandten Bereich durch eine Lichtscheibe abgedeckt ist. Das Gehäuse weist zudem bei dem gezeigten Ausführungsbeispiel zwei Fassungen für die Aufnahme je einer Lichtquelle auf. Die einteilige Lichtscheibe weist optisch wirksame Elemente auf, die als Linsen und Prismen ausgebildet sind und das einfallende Licht auf das Kennzeichenschild lenken.

Als nachteilig erweist sich hierbei, daß bei einem kennzeichennahen Einbauort der Kennzeichenleuchte zwei Lichtquellen erforderlich sind, um das Kennzeichenschild entsprechend den gesetzlichen Bestimmungen beleuchten zu können, wodurch sich eine aufwendige und kostenintensive Herstellbarkeit und Ausführung der Kennzeichenleuchte ergibt. Zudem erweist sich als besonders nachteilig, daß die Kennzeichenleuchte in einem großen Abstand vor dem Kennzeichenschild angeordnet sein muß, da sonst zum einen die der Kennzeichenleuchte nächstliegenden Bereiche des Kennzeichenschildes nur unzureichend beleuchtet werden und zum anderen ungewünschte Schattenbildungen durch die erhabenen Kennzeichen Buchstaben und Zahlen entstehen, was insgesamt zu einer ungleichmäßigen Ausleuchtung des Kennzeichenschildes führt.

Der Erfindung liegt die Aufgabe zugrunde, eine Kennzeichenleuchte für Kraftfahrzeuge zu schaffen, die einfach und kostengünstig ist und bei einem kennzeichennahen Einbauort, das Kennzeichen möglichst gleichmäßig und ohne Schattenbildung bis in alle Randbereiche ausleuchtet.

Die Aufgabe wird erfindungsgemäß dadurch gelöst, daß die Lichtscheibe mindestens einen ersten dem Kennzeichenschild naheliegenden Abschnitt mit einer Anzahl Zylinderlinsen und/oder Tonnenlinsen aufweist, die das einfallende Licht breit bis in die Seitenbereiche des Kennzeichenschildes ablenken, daß die Zylinderlinsen und/oder Tonnenlinsen von radial zu den Symmetrieachsen der Zylinderlinsen und/oder Tonnenlinsen verlaufenden ersten Prismen überlagert sind, die das einfallende Licht in Richtung auf einen ersten Bereich des Kennzeichenschildes streuen, der der Kennzeichenleuchte naheliegt, und daß die Lichtscheibe mindestens einen zweiten Abschnitt mit parallel zu den ersten Prismen verlaufenden zweiten Prismen aufweist, die das einfallende Licht in einen zweiten entfernteren Bereich des Kennzeichenschildes streuen.

Es ist von Vorteil, daß die Lichtscheibe mindestens einen ersten dem Kennzeichenschild naheliegenden Abschnitt mit einer Anzahl Zylinderlinsen und/oder Tonnenlinsen aufweist, die das Licht breit bis in die Seitenbereiche des Kennzeichenschildes ablenken, weil die Kennzeichenleuchte somit auch dann die seitlichen Randbereiche des Kennzeichenschildes möglichst gleichmäßig und ohne Schattenbildung ausleuchtet, wenn sie in nur geringem Abstand oberhalb oder unterhalb des Kennzeichenschildes angebracht ist.

In diesem Zusammenhang erweist sich als besonders vorteilhaft, daß die Zylinderlinsen und/oder Tonnenlinsen von radial zu den Symmetrieachsen der Zylinderlinsen und/oder Tonnenlinsen verlaufenden ersten Prismen überlagert sind, die das einfallende Licht in Richtung auf einen ersten Bereich des Kennzeichenschildes streuen, der der Kennzeichenleuchte naheliegt, weil somit der der Kennzeichenleuchte naheliegende erste Bereich des Kennzeichenschildes auch dann gleichmäßig ausgeleuchtet wird, wenn die Kennzeichenleuchte mit nur geringem Abstand vor der Fläche des Kennzeichenschildes angebracht ist.

Dadurch, daß die Lichtscheibe mindestens einen zweiten Abschnitt mit parallel zu den ersten Prismen verlaufenden zweiten Prismen aufweist, die das einfallende Licht in einen zweiten entfernteren Bereich des Kennzeichenschildes streuen, ergibt sich der Vorteil, daß bei einem überlappen des ersten Bereichs mit dem zweiten Bereich die gesamte Fläche des Kennzeichenschildes auf einfache und kostengünstige Weise möglichst gleichmäßig ausgeleuchtet wird und gleichzeitig bei einer kennzeichennahen Befestigung der Kennzeichenleuchte eine Schattenbildung vermieden wird.

Es ist von Vorteil, daß die radial verlaufenden ersten Prismen mit zunehmender Nähe zu dem kennzeichennahen Rand der Lichtscheibe das einfallende Licht stärker zum Kennzeichenschild streuen, weil somit die Gleichmäßigkeit der Ausleuchtung des Kennzeichenschildes in dem der Kennzeichenleuchte naheliegenden ersten Bereich verbessert wird, und die Kennzeichenleuchte noch näher vor der Fläche des Kennzeichenschildes angeordnet werden kann.

Dadurch, daß das Streuverhalten von mindestens zwei benachbarten, radial verlaufenden ersten Prismen gleich ist, ergibt sich der Vorteil, daß sich die durch die radial verlaufenden ersten Prismen beleuchteten Bereiche überschneiden, wodurch die Gleichmäßigkeit der Ausleuchtung weiter gesteigert wird und gleichzeitig die Herstellbarkeit einfacher und kostengünstiger wird.

Vorteilhaft ist, daß die Radien der innenliegenden Zylinderlinsen und/oder Tonnenlinsen größer sind als die Radien der außenliegenden Zylinderlinsen und/oder Tonnenlinsen, weil somit erreicht wird, daß ein größerer Teil des Lichts in die Seitenbereiche des Kennzeichenschildes gelenkt wird, wodurch der Bereich direkt unterhalb der Kennzeichenleuchte nicht heller erscheint als die Seitenbereiche des Kennzeichenschildes und die Kennzeichenleuchte mit einem noch geringerem Abstand oberhalb oder unterhalb des Kennzeichenschildes montiert werden kann.

Dadurch, daß das Streuverhalten jedes der parallel verlaufenden zweiten Prismen gleich ist, ergibt sich der Vorteil, daß der der Kennzeichenleuchte nicht naheliegende zweite Bereich des Kennzeichenschildes durch sich überlappende, beleuchtete Bereiche möglichst gleichmäßig ausgeleuchtet wird.

Es ist von Vorteil, daß die parallel verlaufenden zweiten Prismen zum Rand oder zur Mitte der Lichtscheibe ein stärkeres Streuverhalten aufweisen, weil somit je nach der Höhe des Kennzeichenschildes die von der Kennzeichenleuchte erzeugte Lichtverteilung den Gegebenheiten leicht anpaßbar ist und die zu beleuchtenden Bereiche des Kennzeichenschildes untereinander keine großen Helligkeitsunterschiede aufweisen.

Dadurch, daß die Lichtscheibe mindestens einen dritten Abschnitt zwischen dem ersten Abschnitt (A1) und dem zweiten Abschnitt (A2) aufweist, der glasklar oder mattiert ist und keine optisch wirksamen Elemente aufweist, ergibt sich der besondere Vorteil, daß zum einen das Kennzeichenschild in einem mittleren dritten Bereich durch diffuses oder direktes Licht von der Lichtquelle mit einer vorgegebenen Grundhelligkeit beleuchtet wird und zum anderen durch den weit von dem Kennzeichenschild angeordneten zweiten Abschnitt der Lichtscheibe der zweite Bereich des Kennzeichenschildes gleichmäßig und ohne Schattenbildung ausgeleuchtet werden kann, da sich somit ein besonders günstiger Beleuchtungswinkel ergibt.

Als besonders vorteilhaft erweist es sich, daß die Lichtscheibe in Richtung der parallel verlaufenden zweiten Prismen eine Krümmung aufweist, weil somit bei einer Erhöhung der Gleichmäßigkeit der Ausleuchtung das auf die Lichtscheibe auftreffende Licht noch stärker in die Randbereiche des Kennzeichenschildes gelenkt werden kann und somit die Kennzeichenleuchte noch näher mit noch geringerem oberen oder unteren Abstand vor dem Kennzeichenschild angeordnet werden kann, da die lichtablenkende Wirkung der Zylinder- und/oder Tonnenlinsen verstärkt wird.

Ein Ausführungsbeispiel des Erfindungsgegenstands ist in den Zeichnungen dargestellt und wird im folgenden anhand der Zeichnungen näher beschrieben.

Gleiche oder gleichwirkende Merkmale des Erfindungsgegenstands sind in allen Figuren mit gleichen Bezugszeichen versehen.

Es zeigen
Figur 1 ein Anordnungsbeispiel einer Kennzeichenleuchte (Z) in der Karosserie (K) eines Kraftfahrzeugs,
Figur 2 ein Ausführungsbeispiel einer Kennzeichenleuchte (Z) im Schnitt B-B entsprechend Figur 1,
Figur 3 ein Ausführungsbeispiel einer Lichtscheibe (S) in der Ansicht X entsprechend Figur 1,
Figur 4 einen Schnitt C-C der Lichtscheibe (S) entsprechend Figur 3,
Figur 5 einen Schnitt A-A der Lichtscheibe (S) entsprechend Figur 4 und der in Figur 1 gezeigten Einbaulage,
Figur 6 einen Strahlengang entsprechend Schnitt C-C durch die Lichtscheibe (S),
Figur 7 ein Ausleuchtungsbeispiel eines Kennzeichenschildes (KS),
Figur 8 ein weiteres Ausleuchtungsbeispiel eines Kennzeichenschildes (KS).

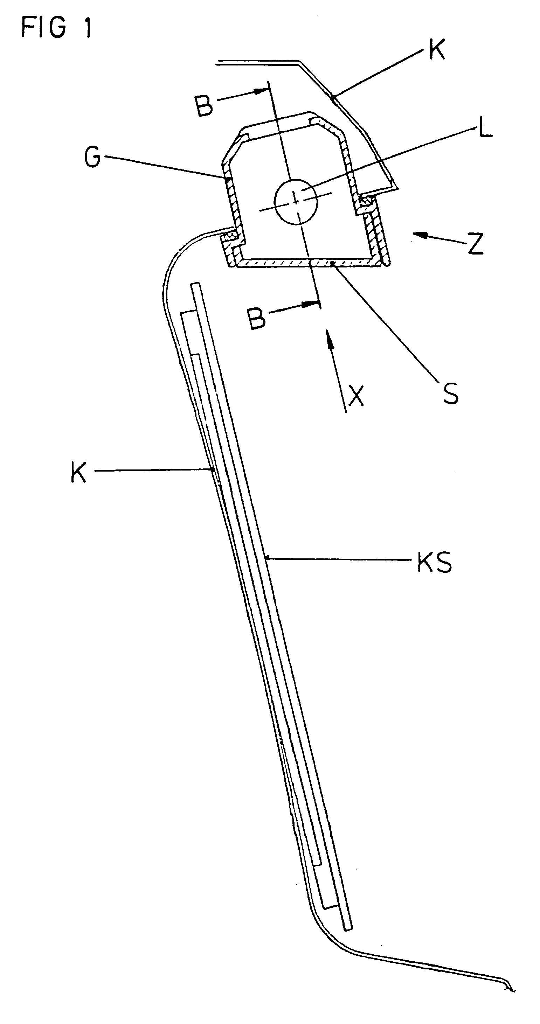

Figur 1 zeigt ein Anordnungsbeispiel einer Kennzeichenleuchte (Z) in der Karosserie (K) eines Kraftfahrzeugs, die ein Kennzeichenschild (KS) mittels einer Lichtquelle (L) beleuchtet. Das Gehäuse der Kennzeichenleuchte (Z) ist dabei wasserdicht in einer Öffnung der Fahrzeugkarosserie (K) angeordnet. Die Kennzeichenleuchte (Z) ist hier beispielhaft direkt oberhalb des Kennzeichenschildes (KS) angeordnet, wobei die Schnittzeichnung verdeutlicht, daß die Ebene der Lichtscheibe (S) mit der Ebene des Kennzeichenschildes (KS) hier beispielhaft einen Winkel < 90° bildet. Die Kennzeichenleuchte (Z) ist in einem nur sehr kleinen Abstand zu der oberen Kante des Kennzeichenschildes (KS) angeordnet. Zudem ist die Kennzeichenleuchte (Z) auch nur mit einem sehr geringen Abstand vor der Fläche des Kennzeichenschildes (KS) angeordnet. Bei anderen Ausführungsbeispielen kann die Kennzeichenleuchte (Z) auch unterhalb des Kennzeichenschildes (KS) angeordnet sein.

Zudem können die Abstände der Kennzeichenleuchte (Z) zu dem Kennzeichenschild (KS) je nach Ausführung variieren.

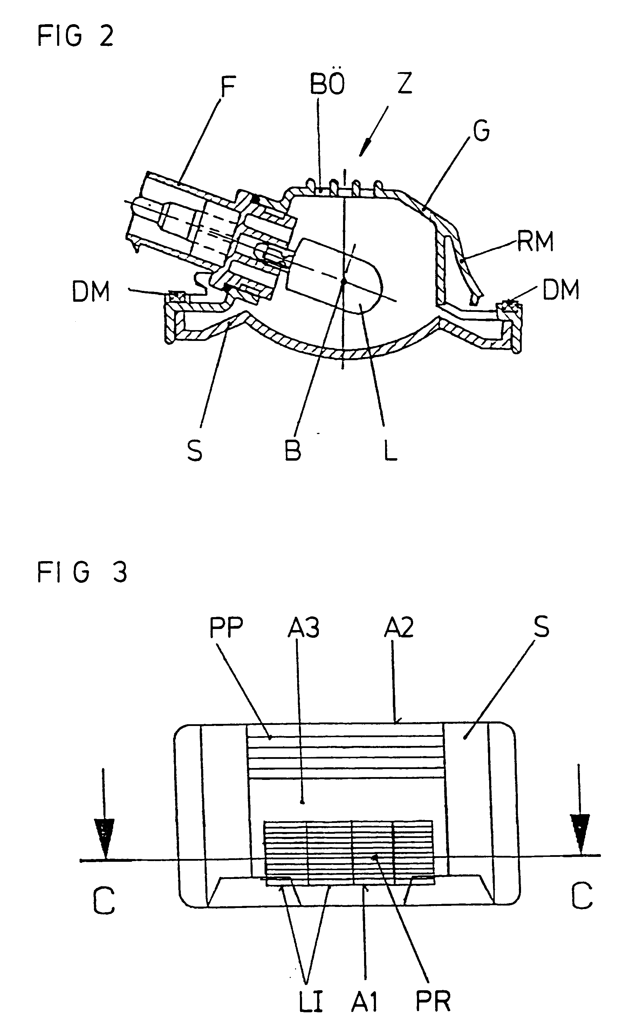

Figur 2 zeigt ein Ausführungsbeispiel der Kennzeichenleuchte (Z) im Längsschnitt. Die Kennzeichenleuchte (Z) weist hier beispielhaft ein Gehäuse (G) auf, das über Rastmittel (RM), Dichtungsmittel (DM) und Belüftungsöffnungen (BÖ) verfügen kann. Das vorzugsweise aus Kunststoff gefertigte Gehäuse weist eine Fassung auf, die eine Lichtquelle (L) enthält. In dem dem Kennzeichenschild (KS) zugewandten Bereich ist das Gehäuse (G) der Kennzeichenleuchte (Z) durch eine Lichtscheibe (S) abgeschlossen. In dem Bereich der Lichtscheibe (S) der das Kennzeichenschild (KS) beleuchten soll, ist die Lichtscheibe (S) hier beispielhaft in Längsrichtung gekrümmt ausgeführt. In der Figur 2 ist zudem der Brennpunkt (B) der Lichtquelle (L) gekennzeichnet. Die optisch wirksamen Elemente der Lichtscheibe (S) sind in dieser Figur nicht gezeigt.

Figur 3 zeigt ein Ausführungsbeispiel einer Lichtscheibe (S). Die Lichtscheibe (S) weist in dem Bereich, durch den das Licht auf das Kennzeichenschild (KS) gelenkt werden soll, hier beispielhaft drei Abschnitte (A1, A2, A3) auf.

Der erste Abschnitt (A1) weist hier beispielhaft vier Zylinderlinsen (LI) und/oder Tonnenlinsen (LI) auf, wobei der erste Abschnitt (A1) in dem Bereich der Kennzeichenleuchte (Z) angeordnet ist, der dem Kennzeichenschild (KS) am nächsten liegt. Diese als Zylinderlinsen (LI) und/oder Tonnenlinsen (LI) ausgebildeten Linsen lenken das einfallende Licht breit bis in die Seitenbereiche des Kennzeichenschildes (KS). Die Zylinderlinsen (LI) und/oder Tonnenlinsen (LI) sind von radial zu den Symmetrieachsen der Zylinderlinsen (LI) und/oder Tonnenlinsen (LI) verlaufenden ersten Prismen (PR) überlagert, die das einfallende Licht in Richtung auf einen ersten Bereich (D1) des Kennzeichenschildes (KS) streuen, der der Kennzeichenleuchte (Z) naheliegt.

Die Lichtscheibe (S) weist hier beispielhaft einen zweiten Abschnitt (A2) mit hier beispielhaft in Längsrichtung der Lichtscheibe (S), das heißt, parallel zu den ersten Prismen (PR) verlaufenden Prismen (PP) auf, die das einfallende Licht in einen zweiten entfernteren Bereich (D2) des Kennzeichenschildes streuen, der der Kennzeichenleuchte (Z) nicht naheliegt.

Bei dem hier gezeigten Ausführungsbeispiel der Kennzeichenleuchte (Z) weist die Lichtscheibe (S) zwischen dem ersten Abschnitt (A1) und dem zweiten Abschnitt (A2) einen dritten Abschnitt (A3) auf, der glasklar oder mattiert ist und keine optisch wirksamen Elemente aufweist und einen dritten mittleren Bereich (D3) des Kennzeichenschildes (KS) mit einer Grundhelligkeit beleuchtet.

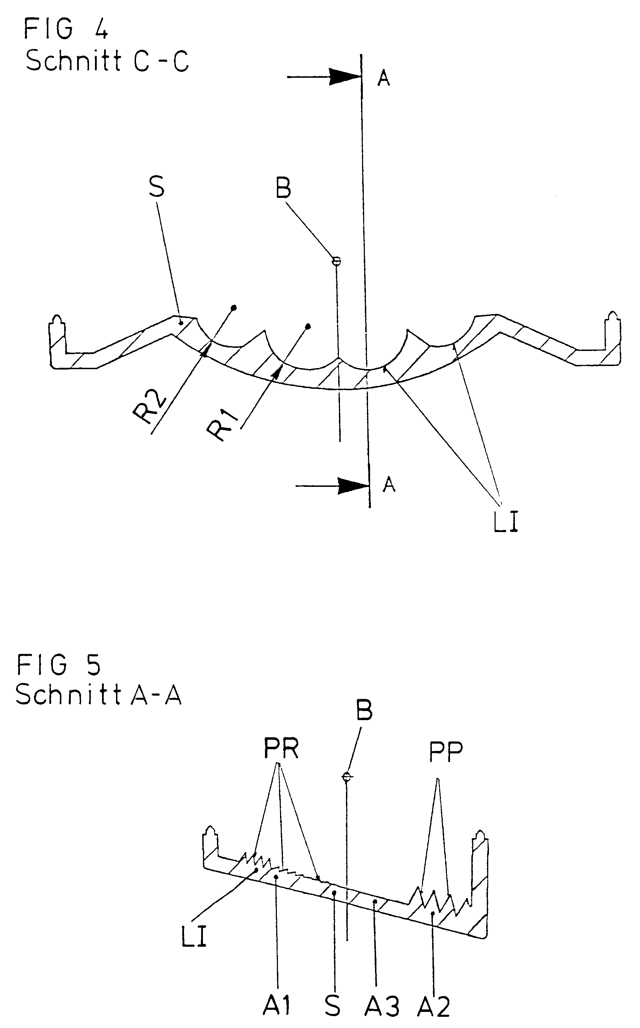

Figur 4 zeigt einen Schnitt C-C der Lichtscheibe (S) entsprechend Figur 3. Der Schnitt C-C verläuft dabei durch den Bereich der Zylinderlinsen (LI) und/oder Tonnenlinsen (LI). Wie aus der Darstellung zu erkennen ist, weisen die bei der hier beispielhaft gezeigten Anzahl von Zylinderlinsen (LI) und/oder Tonnenlinsen (LI) innen liegenden Zylinderlinsen (LI) und/oder Tonnenlinsen (LI) einen ersten Radius (R1) auf, der größer ist als der zweite Radius (R2) der außenliegenden Zylinderlinsen (LI) und/oder Tonnenlinsen (LI), wodurch das auf den ersten Abschnitt (A1) fallende Licht in einem größeren Maß in die seitlichen Randbereiche des Kennzeichenschildes (KS) gestreut wird. Der erste Radius (R1) und der zweite Radius (R2) können je nach den vorgegebenen Anforderungen variieren. Die Anzahl der Zylinderlinsen (LI) und/oder Tonnenlinsen (LI) kann ebenfalls in Abhängigkeit von den verschiedenen Ausführungsformen variieren. Wie aus der Figur 4 erkennbar ist, gehen die Zylinderlinsen (LI) und/oder Tonnenlinsen (LI) in stark ausgeprägten Anschlußbereichen ineinander über, wodurch besonders in dem Bereich des übergangs von den innenliegenden Linsen zu den außenliegenden Linsen ein extrem starkes Ablenkverhalten erreicht wird. Das Ablenkverhalten wird dabei durch die Krümmung der Lichtscheibe (S) in Längsrichtung verstärkt.

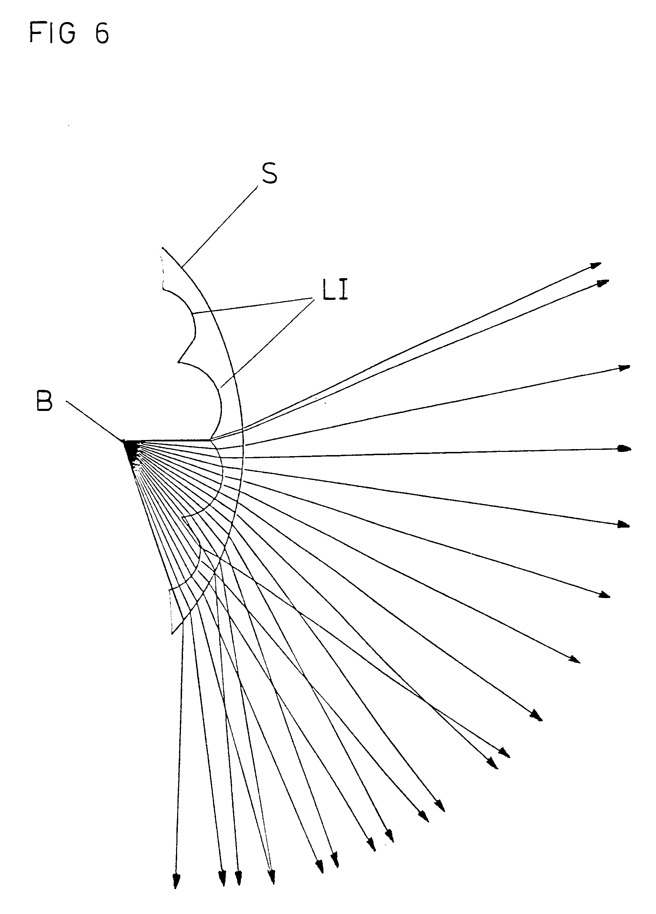

Figur 5 zeigt einen Schnitt A-A der Lichtscheibe (S) entsprechend Figur 4. Die Lichtscheibe (S) weist hier beispielhaft drei Abschnitte (A1, A2, A3) auf, wobei der dritte Abschnitt (A3) zwischen dem ersten Abschnitt (A1) und dem zweiten Abschnitt (A2) angeordnet ist. Dieser dritte Abschnitt (A3), der für eine allgemeine Grundbeleuchtung des Kennzeichenschildes (KS) vorwiegend in dessen mittleren Bereich sorgen soll, weist keine optisch wirksamen Elemente auf und ist glasklar oder mattiert ausgeführt.

Der zweite Abschnitt (A2) weist parallel zu den ersten Prismen (PR) verlaufende zweite Prismen (PP) auf, die das einfallende Licht in den zweiten Bereich (D2) des Kennzeichenschildes streuen. Die parallel verlaufenden zweiten Prismen (PP) weisen hier eine gleiche Ausbildung und somit ein gleiches Abbildungsverhalten auf, wobei durch die Anordnung im Bezug auf den Brennpunkt (B) der Kennzeichenleuchte (Z) die parallel verlaufenden zweiten Prismen (PP) das Licht in sich überlagernde Bereiche des zweiten Bereichs (D2) des Kennzeichenschildes streuen. Die Anzahl und die Ausbildung der in Längsrichtung verlaufenden Prismen kann dabei von Anwendungsfall zu Anwendungsfall variieren. Bei einem speziellen Anwendungsfall kann der dritte Abschnitt (A3) entfallen und die Lichtscheibe (S) nur über einen ersten Abschnitt (A1) und einen zweiten Abschnitt (A2) verfügen.

Der erste Abschnitt (A1) weist eine vorgegebene Anzahl von Zylinderlinsen (LI) und/oder Tonnenlinsen (LI) auf. Bei dem hier in Figur 5 gezeigten Ausführungsbeispiel entsprechend Figur 4 ist ein Schnitt durch eine Zylinderlinse (LI) gezeigt. Wie in der Darstellung gekennzeichnet ist, ist die Zylinderlinse (LI) durch radial verlaufende erste Prismen (PR) überlagert, die das einfallende Licht in Richtung auf den oberen Bereich des Kennzeichenschildes streuen.

Der erste Abschnitt (A1) liegt dabei dem Kennzeichenschild (KS) am nächsten. Um die der Kennzeichenleuchte (Z) am nächsten liegende Bereiche und auch die am weitest entfernt liegenden Seitenbereiche im ersten Bereich (D1) des Kennzeichenschildes (KS) möglichst gleichmäßig ausleuchten zu können, streuen die radial verlaufenden ersten Prismen (PR) mit zunehmender Nähe zu dem kennzeichennahen Rand der Lichtscheibe (S) das einfallende Licht stärker zum Kennzeichenschild (KS). Um dies zu erreichen, sind die radial verlaufenden ersten Prismen (PR) hier beispielhaft zu dem Rand der Lichtscheibe (S) mit zunehmender Streustärke ausgebildet. Beispielhaft weisen hier jeweils vier der radial verlaufenden ersten Prismen (PR) eine gleiche Ausbildung auf, so daß durch die Anordnung der radial verlaufenden ersten Prismen zu dem Brennpunkt (B) der Lichtquelle (L) sich in dem ersten Bereich (D1) des Kennzeichenschildes (KS) überlagernde Bereiche der Ausleuchtung ergeben, was zu einer hohen Gleichmäßigkeit der Ausleuchtung führt. Bei einem anderen Ausführungsbeispiel kann die Anzahl der radial verlaufenden ersten Prismen (PR) von der hier gezeigten Anzahl verschieden sein. Zudem kann die Größe der gezeigten Abschnitte (A1, A2, A3) variieren. Je nach den geforderten Streueigenschaften der radial verlaufenden ersten Prismen (PR) kann das Streuverhalten der radial verlaufenden ersten Prismen (PR) und deren Anordnung variieren.

Figur 6 zeigt beispielhaft einen Strahlengang durch den ersten Abschnitt (A1) einer Lichtscheibe (S) entsprechend dem Schnitt (C-C), wie er in Figur 4 gezeigt ist. Dadurch, daß die innenliegenden Zylinderlinsen (LI) und/oder Tonnenlinsen (LI) einen größeren Radius aufweisen als die außenliegenden Zylinderlinsen (LI) und/oder Tonnenlinsen (LI) und durch die extremen übergangsbereiche zwischen den innenliegenden Zylinderlinsen (LI) und/oder Tonnenlinsen (LI) und den außenliegenden Zylinderlinsen (LI) und/oder Tonnenlinsen (LI) wird ein größerer Teil des Lichts von der Lichtquelle (L), deren Brennpunkt (B) hier gezeigt ist, in die entfernter liegenden Seitenbereiche des Kennzeichenschildes (KS), das hier nicht gezeigt ist, abgelenkt, wodurch bei einer extrem nahen Anbaulage der Kennzeichenleuchte (Z) zu dem Kennzeichenschild (KS) eine hohe Gleichmäßigkeit bei der Ausleuchtung des ersten Bereiches (D1) des Kennzeichenschildes (KS) erreicht wird. Durch die Überlagerung der Zylinderlinsen (LI) und/oder Tonnenlinsen (LI) mit radial zu den Zylinderachsen verlaufenden ersten Prismen (PR) und deren Abstufung im Streuverhalten wird zudem auf besonders kostengünstige und einfache Weise eine ungewünschte Schattenbildung in dem ersten Bereich des Kennzeichenschildes (KS), der der Kennzeichenleuchte (Z) naheliegt, vermieden.

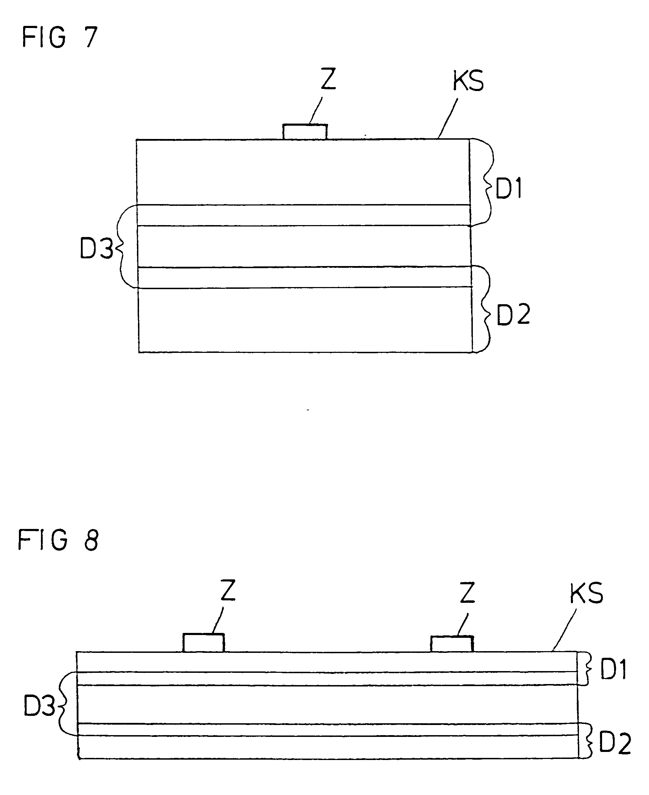

Figur 7 zeigt ein erstes Beleuchtungsbeispiel eines Kennzeichenschildes (KS). Die Höhe des Kennzeichenschildes (KS) ist hier nur unwesentlich geringer als dessen Länge. Bei einem solchen Kennzeichenschild (KS) genügt bei einer extrem nahen Anbaulage der Kennzeichenleuchte (Z) eine einzige Kennzeichenleuchte (Z) zur Ausleuchtung des Kennzeichenschildes (KS). Die Kennzeichenleuchte (Z) kann dabei oberhalb oder unterhalb des Kennzeichenschildes (KS) angeordnet sein. Der erste Abschnitt (A1) der Lichtscheibe (S) der dem Kennzeichenschild (KS) am nächsten liegt, beleuchtet dabei beispielhaft den ersten Bereich (D1), der hier beispielhaft der obere Bereich des Kennzeichenschildes (KS) ist. Der zweite Abschnitt (A2) der Lichtscheibe (S) beleuchtet hier beispielhaft den zweiten entfernteren hier beispielhaft unteren Bereich (D2) des Kennzeichenschildes (KS). Der dritte Abschnitt (A3) beleuchtet, falls vorhanden, den dritten mittleren Bereich (D3) des Kennzeichenschildes (KS). Um eine gleichmäßige Ausleuchtung des Kennzeichenschildes (KS) zu erreichen, überlagern sich die Bereiche (D1, D2, D3). Ist ein dritter Abschnitt (A3) auf der Lichtscheibe (S) nicht vorhanden, so überlagern sich der erste Bereich (D1) und der zweite Bereich (D2). Je nach dem Ausführungsbeispiel können die einzelnen Bereiche (D1, D2, D3) unterschiedliche Größen haben, zudem können die Trennungslinien und die Überlagerungsbereiche anders aussehen, als hier beispielhaft gezeigt. Insbesondere können die Übergangsbereiche in geschwungenen Linien verlaufen.

Figur 8 zeigt ein Ausführungsbeispiel eines Kennzeichenschildes (KS) mit großer Längsausdehnung. Hierbei kann es, um bei einem extrem nahen Anbau der Kennzeichenleuchte (Z) an das Kennzeichenschild (KS) für eine gleichmäßige Ausleuchtung des Kennzeichenschildes (KS) erforderlich sein, zwei Kennzeichenleuchten (Z) zu verwenden. Auch bei diesem Ausführungsbeispiel werden durch die Kennzeichenleuchten (Z) drei beispielhaft gezeigte Bereiche (D1, D2, D3) beleuchtet. Im übrigen gelten die gleichen Ausführungen wie schon zu Figur 7.

## Patentansprüche

1. Kennzeichenleuchte für Kraftfahrzeuge, mit einem Gehäuse, einer Lichtquelle, einer Fassung für die Lichtquelle in dem Gehäuse und mit einer Lichtscheibe, die Abschnitte mit optisch wirksamen Elementen aufweist, die als Linsen und/oder Prismen ausgebildet sind, dadurch gekennzeichnet, daß die Lichtscheibe (S) mindestens einen ersten dem Kennzeichenschild (KS) naheliegenden Abschnitt (A1) mit einer Anzahl Zylinderlinsen (LI) und/oder Tonnenlinsen (LI) aufweist, die das einfallende Licht breit bis in die Seitenbereiche des Kennzeichenschildes (KS) ablenken, daß die Zylinderlinsen (LI) und/oder Tonnenlinsen (LI) von radial zu den Symmetrieachsen der Zylinderlinsen (LI) und/oder Tonnenlinsen (LI) verlaufenden ersten Prismen (PR) überlagert sind, die das einfallende Licht in Richtung auf einen ersten Bereich (D1) des Kennzeichenschildes (KS) streuen, der der Kennzeichenleuchte (Z) naheliegt, und daß die Lichtscheibe (S) mindestens einen zweiten Abschnitt (A2) mit parallel zu den ersten Prismen (PR) verlaufenden zweiten Prismen (PP) aufweist, die das einfallende Licht in einen zweiten entfernteren Bereich (D2) des Kennzeichenschildes (KS) streuen.

2. Kennzeichenleuchte nach Anspruch 1, dadurch gekennzeichnet, daß die radial verlaufenden ersten Prismen (PR) mit zunehmender Nähe zu dem kennzeichennahen Rand der Lichtscheibe (S) das einfallende Licht stärker zum Kennzeichenschild (KS) streuen.

3. Kennzeichenleuchte nach Anspruch 2, dadurch gekennzeichnet, daß das Streuverhalten von mindestens zwei benachbarten, radial verlaufenden ersten Prismen (PR) gleich ist.

4. Kennzeichenleuchte nach Anspruch 3, dadurch gekennzeichnet, daß die Radien (R1, R2) der innenliegenden Zylinderlinsen (LI) und/oder Tonnenlinsen (LI) größer sind als die Radien (R1, R2) der außenliegenden Zylinderlinsen (LI) und/oder Tonnenlinsen (LI).

5. Kennzeichenleuchte nach Anspruch 1, dadurch gekennzeichnet, daß das Streuverhalten jedes der parallel verlaufenden zweiten Prismen (PP) gleich ist.

6. Kennzeichenleuchte nach Anspruch 5, dadurch gekennzeichnet, daß die parallel verlaufenden zweiten Prismen (PP) zum Rand oder zur Mitte der Lichtscheibe (S) ein stärkeres Streuverhalten aufweisen.

7. Kennzeichenleuchte nach mindestens einem der vorstehenden Ansprüche, dadurch gekennzeichnet, daß die Lichtscheibe (S) mindestens einen dritten Abschnitt (A3) zwischen dem ersten Abschnitt (A1) und dem zweiten Abschnitt (A2) aufweist, der glasklar oder mattiert ist und keine optisch wirksamen Elemente aufweist.

8. Kennzeichenleuchte nach mindestens einem der vorstehenden Ansprüche, dadurch gekennzeichnet, daß die Lichtscheibe (S) in Richtung der parallel verlaufenden zweiten Prismen (PP) eine Krümmung aufweist.

## Claims

1. Number-plate illumination for motor vehicles, comprising a housing, a light source, a socket for the light source in the housing and a light plate with optically effective elements arranged to be lenses and/or prisms, **characterised in that** the light plate (S) comprises at least a first section (A1), which is near the number plate (KS) and has a number of cylinder lenses (LI) and/or ton lenses (LI) which divert incidental light broadly up to and into the lateral areas of the number plate (KS), that the cylinder lenses (LI) and/or ton lenses (LI) are superimposed by first prisms (PR) which extend radially to the symmetry axes of the cylinder lenses (LI) and/or ton lenses (LI), which disperse incidental light in the direction of a first area (D1) of the number plate (KS) which is near the number plate (Z), and that the light plate (S) comprises at least one second section (A2) with second prisms (PP) which extend parallel to theZ first prisms (PR) and which disperse incidental light in a second more remote area (D2) of the number plate (KS).

2. Number-plate illumination according to claim 1, **characterised in that** the radially extending first prisms (PR) disperse incidental light more strongly towards the number plate (KS) the closer they are to the edge of the light plate (S) near the number plate.

3. Number-plate illumination according to claim 2, **characterised in that** the dispersion behaviour of at least two adjacent and radially extending first prisms (PR) is equal.

4. Number-plate illumination according to claim 3, **characterised in that** the radii (R1, R2) of the inner cylinder lenses (LI) and/or ton lenses (LI) are greater than the radii (R1, R2) of the outer cylinder lenses (LI) and/or ton lenses.

5. Number-plate illumination according to claim 1, **characterised in that** the dispersion behaviour of each of the parallel extending second prisms (PP) is equal.

6. Number-plate illumination according to claim 5, **characterised in that** the parallel extending second prisms (PP) have a stronger dispersion behaviour towards the edge or the middle of the light plate (S).

7. Number-plate illumination according to at least one of the above claims, **characterised in that** the light plate (S) comprises at least one third section (A3) between the first section (A1) and the second section (A2), which is as clear as glass or matted and without optically effective elements.

8. Number-plate illumination according to at least one of the above claims, **characterised in that** the light plate (S) has a curvature in the direction of the parallel extending second prisms (PP).

## Revendications

1. Feu d'éclairage de plaque d'immatriculation pour véhicules, comportant un boîtier, une source lumineuse, une douille pour la source lumineuse dans le boîtier et comportant une plaque d'éclairement qui présente des segments avec des éléments à effet optique qui sont réalisés sous forme de lentilles et/ou de prismes, caractérisé en ce que la plaque d'éclairement (S) présente au moins un premier segment (A1) situé à proximité de la plaque d'immatriculation (KS) avec un nombre de lentilles (LI) cylindriques et/ou en forme de fuseaux qui dévient largement la lumière incidente jusque dans les zones latérales de la plaque d'immatriculation (KS), en ce que les lentilles (LI) cylindriques et/ou en forme de fuseaux sont superposées par des premiers prismes (PR) radiaux par rapport aux axes de symétrie des lentilles (LI) cylindriques et/ou en forme de fuseaux, lesdits premiers prismes (PR) diffusant la lumière incidente en direction d'une première zone (D1) de la plaque d'immatriculation (KS) qui est à proximité du feu d'éclairage (Z) de la plaque d'immatriculation, et en ce que la plaque d'éclairement (S) présente au moins un second segment (A2) avec des seconds prismes (PP) s'étendant parallèlement aux premiers prismes (PR), lesdits seconds prismes (PP) diffusant la lumière incidente dans une seconde zone (D2) plus éloignée de la plaque d'immatriculation (KS).

2. Feu d'éclairage de plaque d'immatriculation selon la revendication 1, caractérisé en ce que les premiers prismes (PR) radiaux diffusent la lumière incidente d'autant plus fortement vers la plaque d'immatriculation (KS) que l'on se rapproche du bord de la plaque d'éclairement S qui est proche de la plaque d'immatriculation.

3. Feu d'éclairage de plaque d'immatriculation selon la revendication 2, caractérisé en ce que le comportement de diffusion d'au moins deux premiers prismes (PR) radiaux voisins est le même.

4. Feu d'éclairage de plaque d'immatriculation selon la revendication 3, caractérisé en ce que les rayons (R1, R2) des lentilles (LI) cylindriques et/ou en forme de fuseaux situées à l'intérieur sont supérieurs aux rayons (R1, R2) des lentilles (LI) cylindriques et/ou forme de fuseaux situées à l'extérieur.

5. Feu d'éclairage de plaque d'immatriculation selon la revendication 1, caractérisé en ce que le comportement de diffusion de chaque second prisme (PP) s'étendant parallèlement est le même.

6. Feu d'éclairage de plaque d'immatriculation selon la revendication 5, caractérisé en ce que les seconds prismes (PP) s'étendant parallèlement présentent un comportement de diffusion plus fort vers le bord ou vers le milieu de la plaque d'éclairement (S).

7. Feu d'éclairage de plaque d'immatriculation selon au moins l'une quelconque des revendications précédentes, caractérisé en ce que la plaque d'éclairement (S) présente au moins un troisième segment (A3) entre le premier segment (A1) et le second segment (A2), qui est en verre transparent ou mat et qui ne présente aucun élément à effet optique.

8. Feu d'éclairage de plaque d'immatriculation selon au moins l'une quelconque des revendications précédentes, caractérisé en ce que la plaque d'éclairement (S) présente une courbure en direction des seconds prismes (PP) s'étendant parallèlement.
